# EUROPÄISCHE PATENTSCHRIFT

(11) **EP 1 828 441 B1**
(45) Veröffentlichungstag und Bekanntmachung des Hinweises auf die Patenterteilung: **02.03.2016**
(21) Anmeldenummer: 05824346.0
(22) Anmeldetag: 22.12.2005
(51) Int. Cl.: C25D 13/22, C25D 21/12

(54) **ELEKTROTAUCHLACKIERANLAGE**
ELECTRODEPOSITION COATING INSTALLATION
INSTALLATION D'APPLICATION DE PEINTURE ELECTROPHORETIQUE PAR IMMERSION

(30) Priorität: 22.12.2004 DE 102004061791
(43) Veröffentlichungstag der Anmeldung: 05.09.2007
(60) Teilanmeldung: 13195984.3
(73) Patentinhaber: Dürr Systems GmbH, 74321 Bietigheim-Bissingen (DE)
(72) Erfinder: KOHLER, Helmut, 71665 Vaihingen (DE); SCHURER, Ralf, 73760 Ostfildern (DE); DIETERICH, Michael, 71679 Asperg (DE)
(74) Vertreter: Hoeger, Stellrecht & Partner Patentanwälte mbB
(86) Internationale Anmeldenummer: PCT/EP2005/013880
(87) Internationale Veröffentlichungsnummer: WO 2006/066920

(56) Entgegenhaltungen:
- DE-A1- 19 942 556
- DE-B3- 10 325 656
- GB-A- 1 203 789
- US-A- 3 444 065
- PATENT ABSTRACTS OF JAPAN Bd. 1997, Nr. 01, 31. Januar 1997 (1997-01-31) -& JP 08 246194 A (HONDA MOTOR CO LTD), 24. September 1996 (1996-09-24)

## Beschreibung

Die vorliegende Erfindung betrifft eine Elektrotauchlackieranlage zum Lackieren von Werkstücken, insbesondere von Fahrzeugkarosserien, umfassend mindestens ein Tauchbad, in dem mindestens eine Elektrode angeordnet ist, eine Fördervorrichtung, welche die Werkstücke in das Tauchbad einbringt und aus dem Tauchbad wieder ausbringt, und eine Stromversorgungseinrichtung, die aus einer Eingangs-Wechselspannung eine Ausgangsspannung, insbesondere eine Ausgangs-Gleichspannung, erzeugt, deren eines Ausgangspotential an mindestens eines der zu lackierenden Werkstücke angelegt wird und deren anderes Ausgangspotential an mindestens eine der im Tauchbad angeordneten Elektroden angelegt wird.

Eine solche Elektrotauchlackieranlage ist beispielsweise aus der DE 103 25 656 B3 bekannt.

Die Stromversorgungseinrichtung dieser bekannten Elektrotauchlackieranlage umfaßt mehrere Stromversorgungseinheiten, deren einer Pol wahlweise mit einer von mehreren Elektrodengruppen und deren anderer Pol mit einer von mehreren Stromschienen, die in der Förderrichtung der Fördervorrichtung aufeinanderfolgen, verbindbar ist. Während des Durchlaufs durch das Tauchbad stehen die Werkstücke jeweils mit einer dieser Stromschienen in elektrischen Kontakt, so daß das Werkstück auf dem dieser Stromschiene zugeordneten elektrischen Potential liegt. Wenn sich ein Werkstück dem Übergang zwischen zwei aufeinanderfolgenden Stromschienen nähert, so werden diese Stromschienen durch Koppelthyristoren elektrisch leitend miteinander verbunden.

Durch die Unterteilung in eine Mehrzahl von in Förderrichtung aufeinanderfolgenden Stromschienen ist es bei dieser Vorrichtung möglich, nacheinander durch das Tauchbad hindurchlaufende Werkstücke mit unterschiedlichen Ausgangspotentialen zu beaufschlagen, sofern die Stromschienen jeweils kürzer sind als der Abstand zwischen zwei aufeinanderfolgenden Werkstücken. Hierdurch können aber die Werkstücke nicht in beliebig geringem Abstand aufeinanderfolgen.

Die GB 1 203 789 offenbart eine Elektrotauchlackieranlage mit einer ununterbrochenen Stromschiene und einer unterbrochenen Stromschiene, wobei die ununterbrochene Stromschiene mit der Wand eines Tauchbeckens verbunden und somit geerdet ist. Die nicht geerdete Stromschiene muss hierbei unterbrochen sein, um die zu lackierenden Werkstücke mit individuellen Potentialen versorgen zu können.

Die US 3 444 065 offenbart eine Elektrotauchlackieranlage mit einer ununterbrochenen Stromschiene und einer Gegenelektrode in Form eines geerdeten Tanks.

Die DE 199 42 556 A1 offenbart eine Elektrotauchlackiervorrichtung mit einer Stromschiene, welche einen Anfangsabschnitt, einen Mittelabschnitt und einen Endabschnitt aufweist, die elektrisch voneinander isoliert sind. Diese galvanische Trennung der Stromschiene in aufeinanderfolgende einzelne Schienenabschnitte ist zwingend erforderlich, um bei dieser Elektrotauchlackiervorrichtung an die Werkstücke jeweils eine individuelle Spannung anlegen zu können.

Die JP 08-246194 A offenbart eine Elektrotauchlackieranlage gemäß dem Oberbegriff von Anspruch 1.

Der vorliegenden Erfindung liegt die Aufgabe zugrunde, eine Elektrotauchlackieranlage der eingangs genannten Art zu schaffen, welche es ermöglicht, jedes Werkstück in einfacher Weise mit einem individuellen Ausgangspotential zu beaufschlagen.

Diese Aufgabe wird durch eine Elektrotauchlackieranlage nach Anspruch 1 gelöst.

Der erfindungsgemäßen Lösung liegt somit das Konzept zugrunde, statt der bei herkömmlichen Elektrotauchlackieranlagen verwendeten stationären Stromsteuereinheiten, welche jeweils eine Stromschiene mit einem längs der Stromschiene konstanten Ausgangspotential versorgen, jedem das Tauchbad durchlaufenden Werkstück jeweils eine mobile Stromsteuereinheit zuzuordnen, die sich zusammen mit dem zugeordneten Werkstück bewegt und individuell für das jeweils zugeordnete Werkstück das jeweils gewünschte Ausgangspotential bereitstellt.

Damit entfällt bei der erfindungsgemäßen Elektrotauchlackieranlage die Notwendigkeit, die Stromschiene im Taktabstand der Werkstücke zu unterteilen, und die Werkstücke können im Prinzip in beliebig dichter Abfolge durch das Tauchbad hindurchbewegt werden.

Grundsätzlich kann an das Werkstück der kathodische oder der anodische Pol der Ausgangsspannung angelegt werden.

Vorzugsweise wird an das Werkstück der kathodische Pol der Ausgangsspannung angelegt.

Bei einer bevorzugten Ausgestaltung der Erfindung umfaßt die Fördervorrichtung mehrere Halterungsgestelle, an denen jeweils ein zu lackierendes Werkstück angeordnet ist, und ist jedem Halterungsgestell jeweils eine Stromsteuereinheit zugeordnet, welche das Ausgangspotential für das an dem betreffenden Halterungsgestell angeordnete Werkstück bereitstellt.

Insbesondere kann vorgesehen sein, daß an jedem Halterungsgestell jeweils eine Stromsteuereinheit angeordnet ist, welche das Ausgangspotential für das an dem betreffenden Halterungsgestell angeordnete Werkstück bereitstellt.

Um die Ausgangspotentiale für mehrere nacheinander das Tauchbad durchlaufende Werkstücke individuell bereitstellen zu können, ist vorzugsweise vorgesehen, daß die Elektrotauchlackieranlage mehrere Stromsteuereinheiten umfaßt und daß das von jeweils einer Stromsteuereinheit bereitgestellte Ausgangspotential von den von den jeweils anderen Stromsteuereinheiten bereitgestellten Ausgangspotentialen unabhängig ist.

Um den Beschichtungsverlauf im Tauchbad für jedes Werkstück in Abhängigkeit vom Werkstücktyp typspezifisch optimieren zu können, kann vorgesehen sein, daß jede Stromsteuereinheit die Ausgangsspannung und/oder den Ausgangsstrom für das ihr zugeordnete Werkstück gemäß einem in Abhängigkeit vom Werkstücktyp typspezifisch vorgegebenen Spannungsverlauf beziehungsweise Stromverlauf steuert oder regelt. Auf diese Weise können Werkstücke unterschiedlicher Werkstücktypen, welche in beliebiger Abfolge das Tauchbad durchlaufen, jeweils in typspezifisch optimierter Weise lackiert werden.

Die Stromversorgungseinrichtung umfasst mindestens eine Stromschiene, mit welcher die mindestens eine Stromsteuereinheit verbindbar ist.

Vorzugsweise ist vorgesehen, daß die Stromversorgungseinrichtung eine Gleichrichterschaltung umfaßt, welche aus der Eingangs-Wechselspannung eine Zwischenausgangsspannung erzeugt, deren eines Potential an eine Stromschiene, mit welcher die mindestens eine Stromsteuereinheit verbindbar ist, angelegt wird.

In diesem Fall kann ferner vorgesehen sein, daß das andere Potential der Zwischenausgangsspannung an die mindestens eine Elektrode in dem mindestens einen Tauchbad angelegt wird.

Ferner kann vorgesehen sein, daß das andere Potential der Zwischenausgangsspannung an eine zweite Stromschiene angelegt wird, welche vorzugsweise im wesentlichen parallel zu der ersten Stromschiene, an welche das eine Potential der Zwischenausgangsspannung angelegt wird, verläuft.

Die Gleichrichterschaltung kann eine, vorzugsweise ungesteuerte, Dioden-Gleichrichterbrücke umfassen.

Ferner kann vorgesehen sein, daß die Gleichrichterschaltung eine Glättungsschaltung zur Reduzierung der Restwelligkeit der Zwischenausgangsspannung umfaßt.

Vorteilhafterweise kann vorgesehen sein, daß die Elektrotauchlackieranlage für mindestens ein Tauchbad nur eine erste Stromschiene, an welche das eine Potential der Zwischenausgangsspannung angelegt wird, und nur eine zweite Stromschiene, an welche das andere Potential der Zwischenausgangsspannung angelegt wird, aufweist, wobei die mindestens eine Stromsteuereinheit mit der ersten und der zweiten Stromschiene verbindbar ist.

Das Vorhandensein von nur einer einzigen ersten Stromschiene und nur einer einzigen zweiten Stromschiene pro Tauchbad vereinfacht den Aufbau und die Montage der Stromversorgungseinrichtung. Ferner entfallen sämtliche Probleme, die mit dem Übergang eines Werkstücks von einer Stromschiene auf die in der Förderrichtung darauffolgende Stromschiene verbunden sind. Die bei herkömmlichen Elektrotauchlackieranlagen erforderlichen Koppelthyristoren zum elektrisch leitenden Verbinden zweier aufeinanderfolgender Stromschienen beim Wechsel eines Werkstücks von der einen Stromschiene zur anderen können entfallen. Außerdem werden keine Sensoren benötigt, welche die Annäherung eines Werkstücks an den Übergang zwischen zwei aufeinanderfolgenden Stromschienen detektieren.

Mindestens einem Tauchbad der Elektrotauchlackieranlage ist mindestens eine Stromschiene, mit welcher die mindestens eine Stromsteuereinheit verbindbar ist und welche sich übergangsfrei über die Länge des Tauchbads hinweg erstreckt, zugeordnet.

Bei einer bevorzugten Ausgestaltung der Erfindung umfaßt die Stromsteuereinheit, die sich zusammen mit einem Werkstück durch einen Abschnitt der Elektrotauchlackieranlage bewegt und das Ausgangspotential für das der Stromsteuereinheit zugeordnete Werkstück bereitstellt, ein Schaltglied, das eine dem Schaltglied zugeführte Schaltglied-Eingangsspannung in eine mit einer Taktfrequenz getaktete Schaltglied-Ausgangsspannung wandelt.

Ein solches Schaltglied kann insbesondere mindestens einen Feldeffekttransistor und/oder mindestens einen IGBT (Isolated Gate Bipolar Transistor) umfassen.

Mittels solcher schnellschaltenden Transistoren kann das Schaltglied mit einer hohen Taktfrequenz getaktet werden, was zur Folge hat, daß die für die Stromsteuereinheit benötigten elektronischen Bauteile klein dimensioniert werden können, so daß die mobile Stromsteuereinheit nur ein geringes Gewicht und ein geringes Volumen aufweist.

Um in einfacher Weise das jeweils gewünschte Ausgangspotential für das der Stromsteuereinheit zugeordnete Werkstück bereitstellen zu können, kann vorgesehen sein, daß die getaktete Schaltglied-Ausgangsspannung ein steuerbares Tastverhältnis aufweist.

Um einen beliebig vorgebbaren Verlauf des Ausgangspotentials für das Werkstück erzielen zu können, ist vorzugsweise vorgesehen, daß die Stromsteuereinheit eine Regelschaltung aufweist, welche das Schaltglied in Abhängigkeit von einer Soll-Ausgangsspannung ansteuert.

Die Taktfrequenz, mit welcher die Schaltglied-Ausgangsspannung getaktet wird, beträgt vorteilhafterweise mindestens ungefähr 10 kHz, vorzugsweise mindestens ungefähr 20 kHz.

Um elektromagnetische Abstrahlungseffekte zu vermeiden, ist es günstig, wenn die Taktfrequenz höchstens ungefähr 200 kHz, vorzugsweise höchstens ungefähr 100 kHz, beträgt.

Um die Restwelligkeit des Ausgangspotentials der Stromsteuereinheit zu reduzieren, kann die Stromsteuereinheit ferner eine Glättungsschaltung umfassen.

Bei einer besonderen Ausgestaltung der Erfindung ist vorgesehen, daß die Stromsteuereinheit eine Impulsformungsschaltung umfaßt. Damit ist es möglich, das Werkstück mit einem, beispielsweise mit einer Wiederholfrequenz von ungefähr 1 kHz bis ungefähr 10 kHz, gepulsten Ausgangspotential zu beaufschlagen. Dies kann insbesondere im Falle der Lackierung von Hohlkörpern zu besseren Lackierergebnissen führen.

Ein Halterungsgestell für eine erfindungsgemäße Elektrotauchlackieranlage kann mit einer Stromsteuereinheit versehen sein, welche das Ausgangspotential für ein an dem Halterungsgestell angeordnetes Werkstück bereitstellt.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Darstellung einer Stromversorgungseinrichtung einer Elektrotauchlackieranlage mit zusammen mit den Werkstücken bewegten Stromsteuereinheiten;
- Fig. 2: ein schematisches Blockschaltbild einer Stromsteuereinheit;
- Fig. 3: eine schematische Seitenansicht einer Fahrzeugkarosserie, die an einem Halterungsgestell der Elektrotauchlackieranlage angeordnet ist und sich oberhalb des Badspiegels eines Tauchbads befindet;
- Fig. 4: eine schematische Draufsicht von oben auf das Halterungsgestell aus Fig. 3;
- Fig. 5: einen schematischen Querschnitt durch die Elektrotauchlackieranlage, mit einer oberhalb des Tauchbads angeordneten Fahrzeugkarosserie;
- Fig. 6: eine schematische Seitenansicht der Fahrzeugkarosserie, die an einem Halterungsgestell der Elektrotauchlackierung angeordnet ist und sich unterhalb des Badspiegels des Tauchbads befindet; und
- Fig. 7: einen schematischen Querschnitt durch die Elektrotauchlackieranlage, mit einer in das Tauchbad vollständig eingetauchten Fahrzeugkarosserie.

Gleiche oder funktional äquivalente Elemente sind in allen Figuren mit denselben Bezugszeichen bezeichnet.

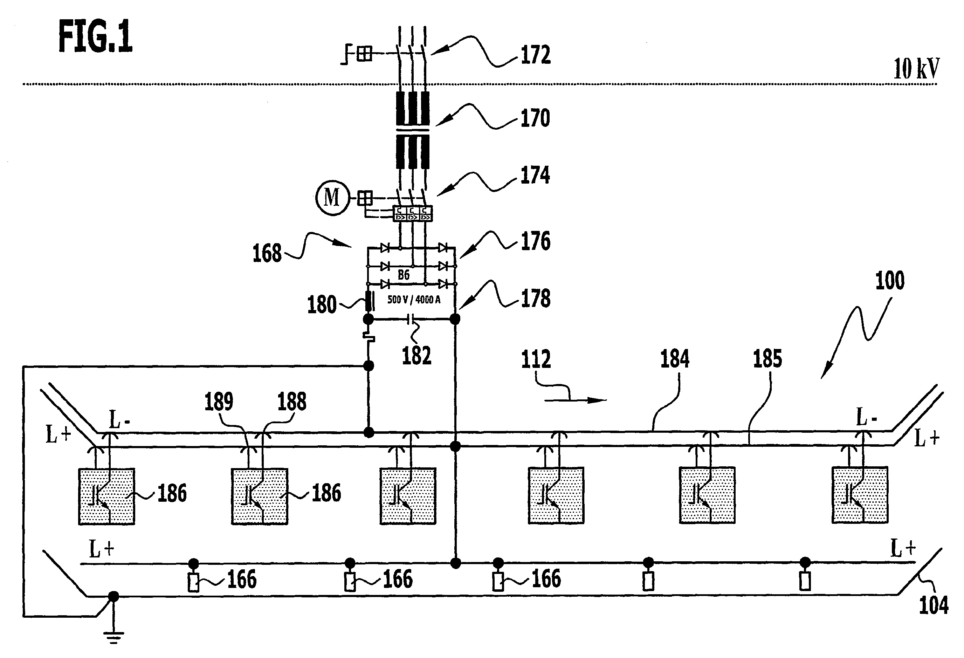

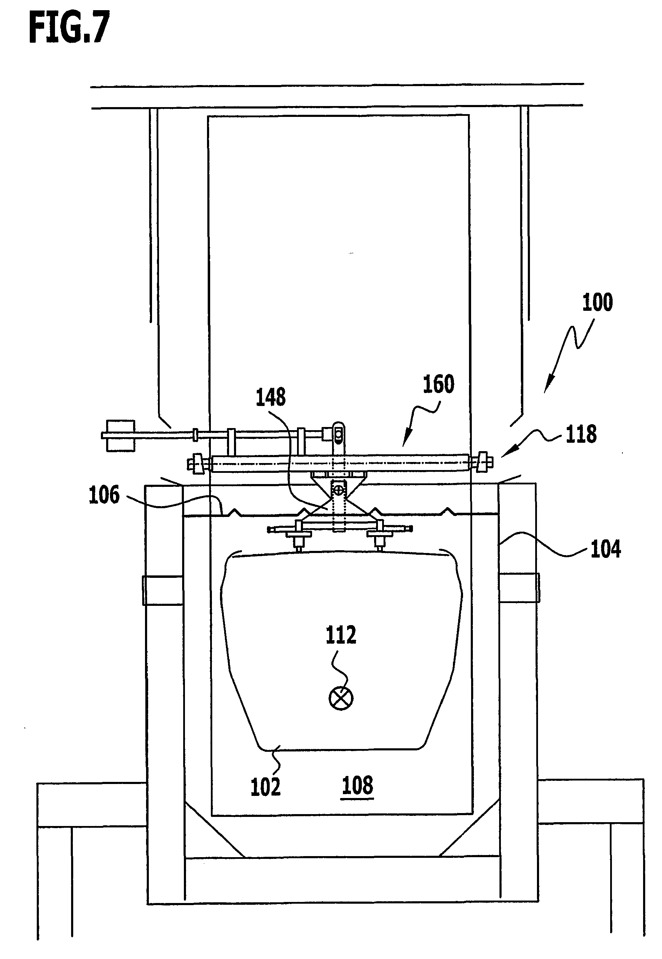

Eine in den Fig. 1 bis 7 dargestellte, als Ganzes mit 100 bezeichnete Elektrotauchlackieranlage zur Lackierung von Fahrzeugkarosserien 102 umfaßt mindestens ein Tauchbecken 104, das bis zu einem Badspiegel 106 mit einem Tauchbad 108 aus einer Lackierflüssigkeit gefüllt ist.

Ferner umfaßt die Elektrotauchlackieranlage 100 eine Fördervorrichtung 110, mittels welcher die Fahrzeugkarosserien 102 in das Tauchbad 108 vollständig einbringbar, im vollständig eingetauchten Zustand längs einer horizontalen Translationsrichtung 112 durch das Tauchbad 108 hindurch bewegbar und anschließend aus dem Tauchbad 108 wieder ausbringbar sind.

Die Fördervorrichtung 110 umfaßt eine Führungseinrichtung 114, welche zwei Führungsschienen 116a, 116b aufweist, von denen sich jeweils eine auf der linken Seite beziehungsweise auf der rechten Seite des Tauchbades 108 parallel zur Translationsrichtung 112 erstreckt.

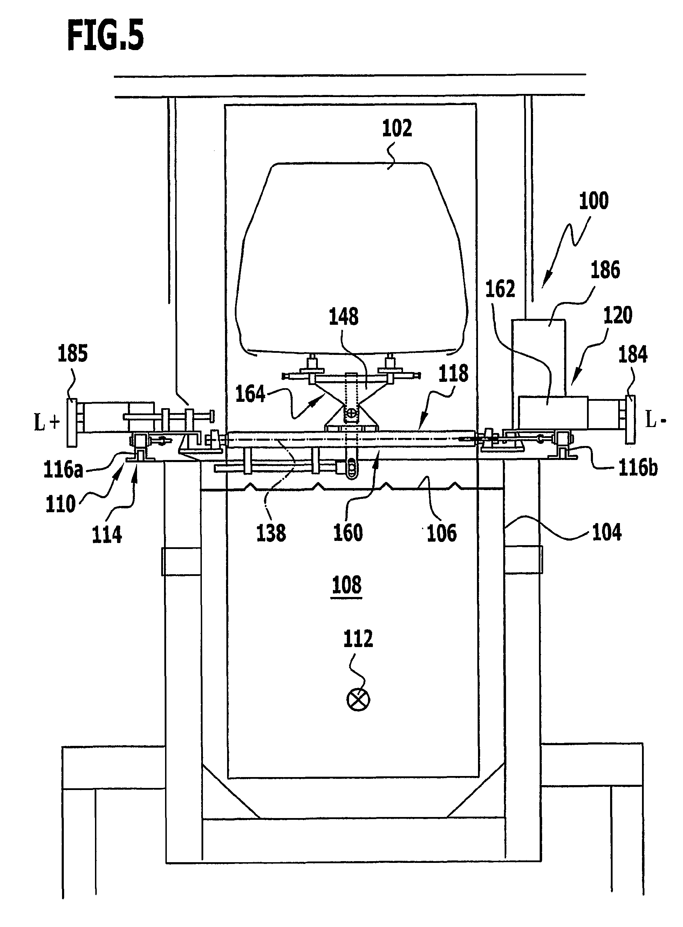

Wie am besten aus Fig. 5 zu ersehen ist, sind beide Führungsschienen 116a, 116b oberhalb des Badspiegels 106 des Tauchbads 108 angeordnet.

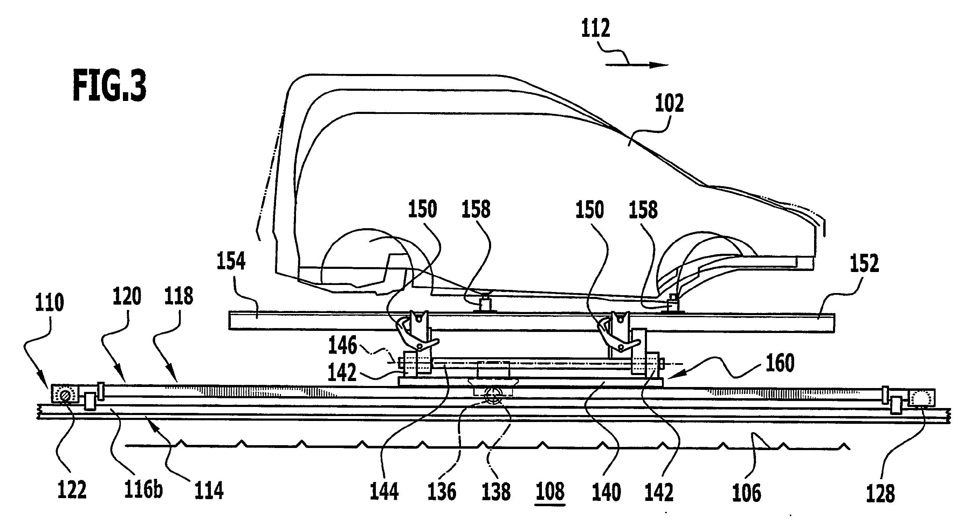

Ferner umfaßt die Fördervorrichtung 110 mehrere Halterungsgestelle 118 (von denen in den Fig. 3 bis 7 nur jeweils eines dargestellt ist), welche längs der Führungseinrichtung 114 der Fördervorrichtung 110 selbständig und unabhängig voneinander verfahrbar sind und längs der Führungseinrichtung 114 im Abstand voneinander aufeinander folgen.

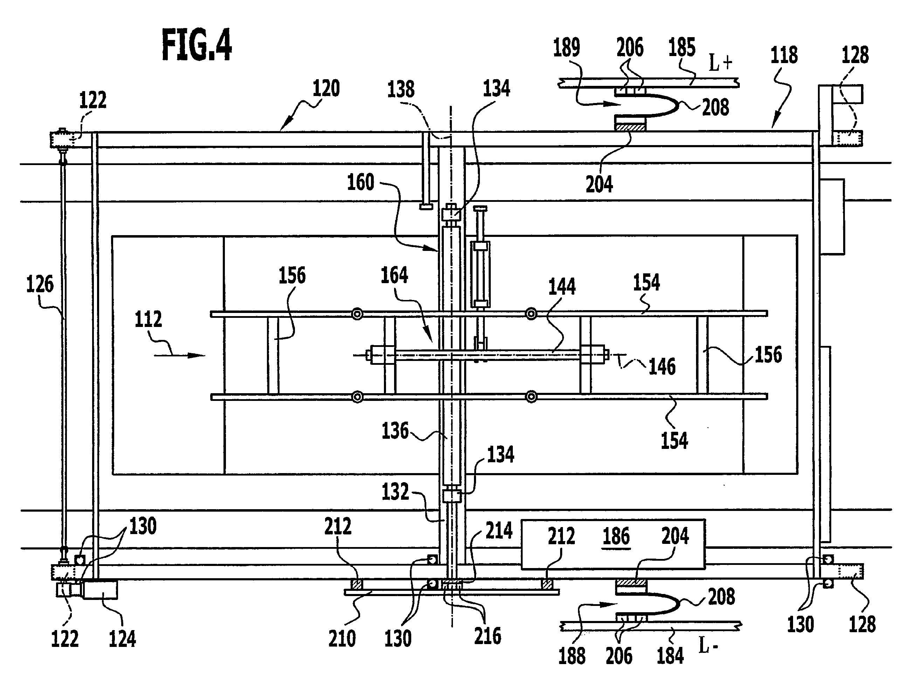

Jedes der Halterungsgestelle 118 umfaßt, wie am besten aus Fig. 4 zu ersehen ist, einen an der Führungseinrichtung 114 geführten Basisteil 120, welcher im wesentlichen die Form eines rechteckigen Rahmens aufweist.

An seinem (in der Translationsrichtung 112 gesehen) hinteren Ende ist das Basisteil 120 mit zwei angetriebenen Laufrollen 122 versehen, welche jeweils an einer horizontalen Oberseite der jeweils zugeordneten Führungsschiene 116a, 116b abrollen.

Eine der beiden angetriebenen Laufrollen 122 ist mittels eines am Basisteil 120 angeordneten Translationsantriebsmotors 124 direkt zu einer Drehbewegung antreibbar, welche mittels einer Gelenkwelle 126 auf die gegenüberliegende, indirekt angetriebene Laufrolle 122 übertragen wird.

Durch die Reibung zwischen den angetriebenen Laufrollen 122 einerseits und des Führungsschienen 116a, 116b andererseits ist der Basisteil 120 des Halterungsgestells 118 längs der Translationsrichtung 112 verfahrbar.
An seinem (in der Translationsrichtung 112 gesehen) vorderen Ende stützt sich der Basisteil 120 mittels zwei nicht angetriebenen Laufrollen 128 an der Oberseite der Führungsschienen 116a bzw. 116b ab.

Eine seitliche Führung des Basisteils 120 an der Führungseinrichtung 114 ist durch mehrere Paare von Führungsrollen 130 gewährleistet, die an einander gegenüberliegenden vertikalen Führungsflächen einer der Führungsschienen 116a, 116b abrollen.

Der Basisteil 120 umfaßt ferner eine ungefähr mittig angeordnete Traverse 132, welche zwei quer zur Translationsrichtung 112 voneinander beabstandete Lagerböcke 134 trägt, an denen die Enden einer Eindrehwelle 136 um eine horizontal und senkrecht zur Translationsrichtung 112 verlaufende Eindrehachse 138 drehbar gelagert sind.

Wie am besten aus Fig. 3 zu ersehen ist, ist an der Eindrehwelle 136 eine Drehplattform 140 festgelegt, die an ihrem vorderen Ende und an ihrem hinteren Ende jeweils einen Lagerbock 142 trägt, wobei an den Lagerböcken 142 eine Drehwelle 144 um eine zu der Eindrehachse 138 senkrechte Drehachse 146 drehbar gelagert ist.

An der Drehwelle 144 sind Träger 148 festgelegt, welche Einspannvorrichtungen 150 tragen, mittels welcher ein die Fahrzeugkarosserie tragender Skidrahmen 152 lösbar an dem Halterungsgestell 118 festlegbar ist.

Der Skidrahmen 152 umfaßt zwei sich parallel zur Längsachse der Fahrzeugkarosserie erstreckende Skidkufen 154, welche über Querstreben 156 miteinander verbunden sind. An mehreren dieser Querstreben 156 greifen die Einspannvorrichtungen 150 an, um den Skidrahmen 152 an dem Halterungsgestell 118 zu halten.

Ferner sind mehrere der Querstreben 156 des Skidrahmens 152 mit Arretiervorrichtungen 158 versehen, mittels welcher die Fahrzeugkarosserie 102 lösbar an dem Skidrahmen 152 festlegbar ist.

Für die Fahrzeugkarosserie 102 selbst sind in Fig. 3 mehrere, alternativ zueinander mögliche Außenkonturen eingezeichnet.

Die Eindrehwelle 136 bildet zusammen mit der Drehplattform 140 und den Lagerböcken 142 einen als Ganzes mit 160 bezeichneten Drehteil des Halterungsgestells 118, welcher mit dem Basisteil 120 längs der Translationsrichtung 112 mitbewegt wird und relativ zu dem Basisteil 120 um die Eindrehachse 138 mittels eines Eindrehantriebsmotors 162, der an dem Basisteil 120 vorgesehen ist, mit demselben mitbewegt wird und über ein Getriebe mit der Eindrehwelle 136 gekoppelt ist, um beliebige Winkel in beliebiger Drehrichtung drehbar ist.

Die Drehwelle 144, die Träger 148 und die Einspannvorrichtungen 150 bilden zusammen einen als Ganzes mit 164 bezeichneten Halteteil des Halterungsgestells 118, welcher mit dem Drehteil 160 und somit mit dem Basisteil 120 längs der Translationsrichtung 112 mitbewegt wird und relativ zu dem Drehteil 160 um die Drehachse 146 mittels einer hier nicht näher beschriebenen, aber in der DE 102 58 132 A1 offenbarten Drehantriebsvorrichtung verdrehbar ist.

Die vorstehend beschriebene Fördervorrichtung 110 zum Einbringen der Fahrzeugkarosserie 102 in das Tauchbad 108 und zum Ausbringen derselben funktioniert wie folgt:

Die Fahrzeugkarosserie 102 befindet sich zunächst in der in Fig. 3 dargestellten Standardstellung, in welcher Fensteröffnungen der Fahrzeugkarosserie oberhalb einer Bodengruppe der Fahrzeugkarosserie angeordnet sind.

Anschließend wird das Halterungsgestell 118 mittels des Translationsantriebsmotors 124 längs der Führungseinrichtung 114 bis an den Anfang des Tauchbades 108 bewegt.

Im Anfangsbereich des Tauchbads 108 wird die Fahrzeugkarosserie 102 in das Tauchbad 108 eingebracht, indem der Drehteil 160 um einen Winkel von 180° um die Eindrehachse 138 relativ zu dem Basisteil 120 gedreht wird.

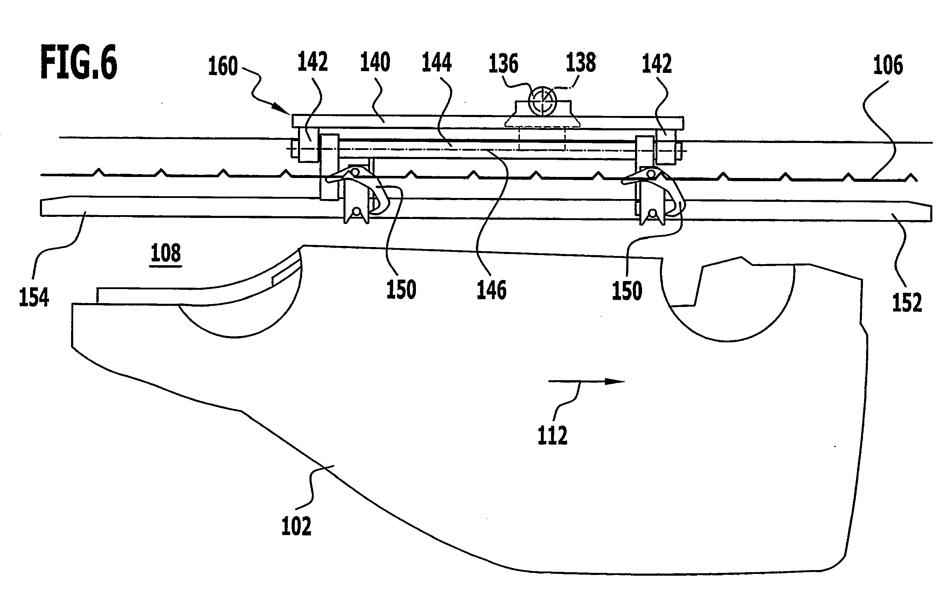

Nach Abschluß der Drehbewegung des Drehteils 160 relativ zu dem Basisteil 120 ist die Fahrzeugkarosserie 102 von der ursprünglichen Standardstellung in die in Fig. 6 dargestellte Kopfüberstellung überführt worden, in welcher die Fensteröffnungen der Fahrzeugkarosserie 102 unterhalb der Bodengruppe der Fahrzeugkarosserie angeordnet sind.

In dieser, nach Abschluß der Drehbewegung des Drehteils 160 erreichten Eintauchstellung ist die Fahrzeugkarosserie 102 vollständig in das Tauchbad 108 eingetaucht.

Der Basisteil 120 des Halterungsgestells 118 befindet sich in der Eintauchstellung der Fahrzeugkarosserie 102 vollständig oberhalb des Badspiegels 106. In dem vollständig eingetauchten Zustand wird die Fahrzeugkarosserie 102 längs der Translationsrichtung 112 durch das Tauchbad 108 bewegt, indem die von dem Translationsantriebsmotor 124 angetriebene Translationsbewegung des Basisteils 120 fortgesetzt wird.

Wenn die Fahrzeugkarosserie 102 aufgrund der Translationsbewegung des Basisteils 120 längs der Führungseinrichtung 114 den Endbereich des Tauchbads 108 erreicht hat, wird die Fahrzeugkarosserie 102 aus dem Tauchbad 108 wieder ausgebracht, indem das Drehteil 160 um einen Winkel von 180° um die Eindrehachse 138 relativ zu dem Basisteil 120 gedreht wird.

Diese Ausdrehbewegung des Drehteils 160 kann mit derselben Drehrichtung wie die Eindrehbewegung oder mit der Eindrehbewegung entgegengesetzter Drehrichtung erfolgen.

Zur Abscheidung der in der Lackflüssigkeit des Tauchbades 108 enthaltenen Lackteilchen an den zu lackierenden Oberflächen der Fahrzeugkarosserien 102 werden die Fahrzeugkarosserien 102 während ihres Durchgangs durch das Tauchbecken 104 auf das kathodische Potential eines elektrischen Feldes gelegt, das zwischen den Fahrzeugkarosserien 102 einerseits und Elektroden 166, die in dem Tauchbad 108 zu beiden Seiten des Förderweges der Fahrzeugkarosserien 102 in (nicht dargestellten) Dialysezellen angeordnet sind und auf das anodische Potential des elektrischen Feldes gelegt werden, andererseits erzeugt wird.

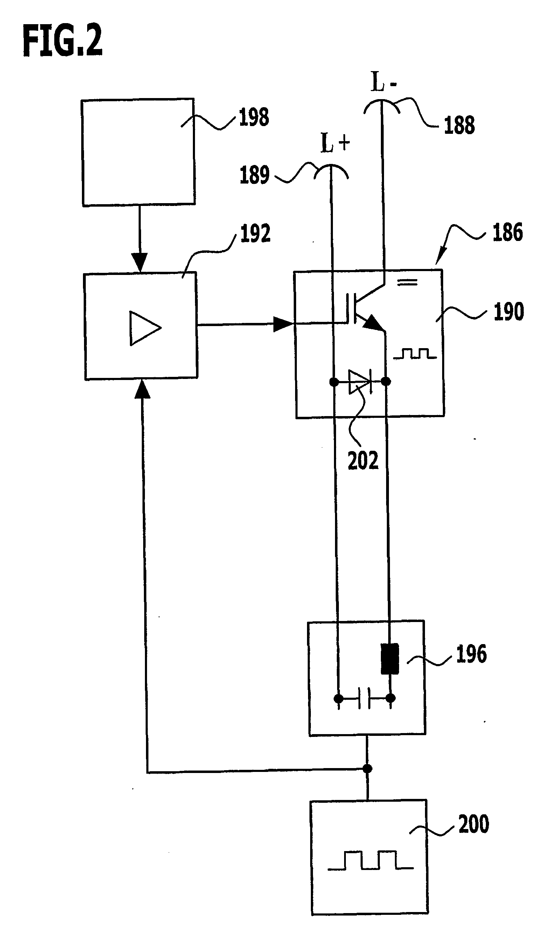

Zur Erzeugung dieser Potentialdifferenz zwischen den Fahrzeugkarosserien 102 und den Elektroden 166 dient die in den Fig. 1 und 2 dargestellte Stromversorgungseinrichtung 168 der Elektrotauchlackieranlage 100.

Wie aus Fig. 1 zu ersehen ist, umfaßt die Stromversorgungseinrichtung 168 einen Drehstromtransformator 170, der primärseitig über einen primärseitigen Schalter 172 an eine Netz-Drehspannung mit einer Amplitude von beispielsweise ungefähr 10 kV und sekundärseitig über einen sekundärseitigen Schalter 174 an die drei Eingänge einer ungesteuerten Drehstrom-Dioden-Gleichrichterbrückenschaltung B6 (mit dem Bezugszeichen 176 bezeichnet) angeschlossen ist.

Der Gleichrichterbrückenschaltung 176 ist eine Glättungsschaltung 178 nachgeschaltet, um die gleichgerichtete Ausgangsspannung der Gleichrichterbrückenschaltung 176 vorzuglätten.

Diese Glättungsschaltung 178 kann insbesondere eine Drossel 180 und einen Kondensator 182 umfassen.

Die Ausgangsspannung der Glättungsschaltung 178 beträgt maximal ungefähr 500 V. Der Ausgangsstrom der Glättungsschaltung 178 beträgt maximal ungefähr 4000 A.

Wie aus Fig. 1 zu ersehen ist, ist der kathodische Pol der Ausgangsspannung der Glättungsschaltung 178, welche als Zwischenausgangsspannung der Stromversorgungseinrichtung 168 dient, mit einer metallischen Hülle des Tauchbeckens 104 verbunden und zusammen mit derselben geerdet.

Derselbe Pol ist ferner mit einer ersten Stromschiene 184 verbunden, welche sich längs der Translationsrichtung 112 vom Eingangsbereich des Tauchbads 108 bis zum Ausgangsbereich des Tauchbads 108 über im wesentlichen die gesamte Länge des Tauchbads 108 erstreckt.

Der anodische Pol der Zwischenausgangsspannung ist mit den im Tauchbad 108 angeordneten Elektroden 166 verbunden, welche dadurch auf anodisches Potential gelegt werden.

Derselbe Pol ist ferner mit einer zweiten Stromschiene 185 verbunden, welche sich längs der Translationsrichtung 112 vom Eingangsbereich des Tauchbads 108 bis zum Ausgangsbereich des Tauchbads 108 über im wesentlichen die gesamte Länge des Tauchbads 108 erstreckt und im wesentlichen parallel zu der ersten Stromschiene 184 verläuft.

Um das kathodische Potential für die jeweils an einem Halterungsgestell 118 gehaltene Fahrzeugkarosserie bereitzustellen, umfaßt jedes Halterungsgestell 118 eine Stromsteuereinheit 186, welche an dem Basisteil 120 des Halterungsgestells 118 angeordnet ist und beispielsweise über einen ersten Schleifkontakt 188 mit der ersten Stromschiene 184 und über einen zweiten Schleifkontakt 189 mit der zweiten Stromschiene 185 in elektrisch leitendem Kontakt steht.

Wie aus den Fig. 4 und 5 zu ersehen ist, kann beispielsweise die erste Stromschiene 184 rechts von dem Förderweg der Halterungsgestelle 118 und die zweite Stromschiene 185 links von dem Förderweg der Halterungsgestelle 118 angeordnet sein.

Der erste Schleifkontakt 188 ist über einen Isolator 204 an dem Basisteil 120 gehalten und umfaßt mehrere Kontaktklötze 206 (beispielsweise aus Kontaktkohle), welche an der ersten Stromschiene 184 entlanggleiten und über ein flexibles Kabel oder eine flexible Leiterbahn 208 in Kontakt mit der ersten Stromschiene 184 gehalten und elektrisch leitend mit der Stromsteuereinheit 186, welche ebenfalls an dem Basisteil 120 gehalten ist, verbunden sind.

Der zweite Schleifkontakt 189, über welchen die Stromsteuereinheit 186 elektrisch leitend mit der zweiten Stromschiene 185 verbunden ist, ist ebenso wie der erste Schleifkontakt 188 aufgebaut und umfaßt insbesondere mehrere Kontaktklötze 206 und ein flexibles Kabel oder eine flexible Leiterbahn 208.

Details der Stromsteuereinheit 186 werden im folgenden unter Bezugnahme auf das Blockschaltbild der Fig. 2 erläutert.

Jede Stromsteuereinheit 186 umfaßt ein Schaltglied 190, dessen erster Eingang mit dem Schleifkontakt 188 und dessen zweiter Eingang mit dem Schleifkontakt 189 verbunden ist, und eine Regelschaltung 192, deren Ausgang mit einem Steuerungseingang des Schaltglieds 190 verbunden ist und die das Schaltglied mit einer Steuerspannung ansteuert, welche aus Rechteckpulsen mit einer Wiederholfrequenz von beispielsweise ungefähr 20 kHz und variabler Breite und somit variablem Tastverhältnis besteht.

Das Schaltglied 190 zerhackt die dem Eingang desselben zugeführte Zwischenausgangsspannung in dem von der Steuerspannung vorgegebenen Takt und mit den von der Steuerspannung vorgegebenen Impulsbreiten, so daß die Ausgangsspannung des Schaltgliedes eine mit der Wiederholfrequenz der Steuerspannung getaktete gepulste Spannung ist.

Die Ausgangsspannung des Schaltgliedes 190 wird durch eine dem Gleichrichter 194 nachgeschaltete Glättungsschaltung 196, welche beispielsweise ein LC-Glied mit einer Drossel und einem Kondensator umfaßt, geglättet, so daß die Ausgangsspannung der Glättungsschaltung 196 eine im wesentlichen konstante Gleichspannung mit einer sehr geringen Restwelligkeit im Bereich von beispielsweise ungefähr 1% ist.

Diese Ausgangsspannung wird als Ist-Wert einem ersten Eingang der Regelschaltung 192 zugeführt.

Der Soll-Wert, mit welchem die Regelschaltung 192 den Ist-Wert vergleicht, wird einem zweiten Eingang der Regelschaltung 192 von einem Sollwert-Geber 198 zugeführt.

Das Tastverhältnis der von der Regelschaltung 192 dem Schaltglied 190 aufgegebenen Steuerspannung wird von der Regelschaltung 192 in Abhängigkeit von der Differenz zwischen dem Ist-Wert und dem Soll-Wert der Ausgangsspannung bestimmt.

Im Sollwert-Geber 198 kann ein Speicher vorhanden sein, aus welchem ein vorgegebener zeitlicher Ausgangsspannungsverlauf als ein zeitlich veränderlicher Sollwert abgerufen wird.

Auf diese Weise ist es möglich, mittels der Stromsteuereinheit 186 eine geregelte Ausgangsspannung zu erzeugen, welche einem vorgegebenen zeitlichen Ausgangsspannungsverlauf folgt.

Auf diese Weise kann die zwischen einer Fahrzeugkarosserie 102 und den Elektroden 166 der Elektrotauchlackieranlage 100 bestehende Potentialdifferenz während des Durchlaufs der Fahrzeugkarosserie 102 durch das Tauchbad 108 für die betreffende Fahrzeugkarosserie 102 individuell in einer vorgegebenen Weise zeitlich variiert werden.

Insbesondere kann der zeitliche Verlauf der Ausgangsspannung der Stromsteuereinheit 186 in Abhängigkeit von dem Typ der der Stromsteuereinheit 186 jeweils zugeordneten Fahrzeugkarosserie 102 gesteuert werden, indem von dem Sollwert-Geber 198 ein dem jeweiligen Typ zugeordneter Ausgangsspannungsverlauf aus mehreren in dessen Speicher abgelegten Ausgangsspannungsverläufen ausgewählt und der der Regelschaltung 192 aufgegebenen Soll-Wert entsprechend zeitlich verändert wird.

Die Information darüber, von welchem Typ die jeweils an dem Halterungsgestell 118 angeordnete Fahrzeugkarosserie 102 ist, kann dem Sollwert-Geber 198 über einen Datenbus von einem Zentralrechner übermittelt werden.

Alternativ hierzu ist es auch möglich, daß die Stromsteuereinheit 186 mit einem Sensor versehen ist, welcher den Typ der Fahrzeugkarosserie 102 durch Wechselwirkung mit einem an der Fahrzeugkarosserie 102 angebrachten Identifikator ermittelt.

Der Ausgang der Glättungsschaltung 196 der Stromsteuereinheit 186 kann direkt mit der jeweiligen Fahrzeugkarosserie 102 verbunden sein, um die Fahrzeugkarosserie 102 mit einer ungepulsten Gleichspannung zu beaufschlagen.

Es kann aber auch vorgesehen sein, wie in Fig. 2 dargestellt, daß die Stromsteuereinheit 186 einen Impulsformer 200 umfaßt, welcher der Glättungsschaltung 186 nachgeschaltet ist und aus der geglätteten Ausgangsspannung der Glättungsschaltung 196 eine Rechteckimpulsfolge mit einer Wiederholfrequenz, die beispielsweise im Bereich von ungefähr 1 kHz bis ungefähr 10 kHz liegt, erzeugt. Der Ausgang des Impulsformers 200 ist mit der Fahrzeugkarosserie 102 verbunden, so daß die Fahrzeugkarosserie 102 mit dieser gepulsten Ausgangsspannung beaufschlagt wird.

Eine solche gepulste Ausgangsspannung kann insbesondere im Falle der Lackierung von Hohlkörpern zu besseren Lackierergebnissen führen.

Geeignete Impulsformerschaltungen sind an sich bekannt, weshalb auf Details einer solchen Schaltung hier nicht eingegangen wird.

Die elektrisch leitende Verbindung des Ausgangs des Impulsformers 200 mit der Fahrzeugkarosserie 102 kann beispielsweise über eine seitlich an dem Basisteil des Halterungsgestells 118 gehaltene, sich parallel zur Translationsrichtung 112 erstreckende Stromschiene 210 erfolgen, welche über Isolatoren 212 an dem Basisteil gehalten und über ein (nicht dargestelltes) Kabel mit dem Ausgang des Impulsformers 200 verbunden ist.

Das zu dieser Stromschiene 210 hin weisende Ende der Eindrehwelle 136 ist bis in die Nähe der Stromschiene 210 verlängert und trägt an seiner der Stromschiene 210 zugewandten Stirnfläche, über einen Isolator 214, mehrere Kontaktklötze 216, welche drehfest an dem Isolator 214 und somit an der Eindrehwelle 136 angeordnet sind, mit der Stromschiene 210 in elektrisch leitendem Kontakt stehen und bei einer Drehbewegung der Eindrehwelle 136 um die Eindrehachse 138 an der den Kontaktklötzen 216 zugewandten Oberfläche der Stromschiene 210 abgleiten.

Die Kontaktklötze 216 sind elektrisch leitend mit einem (nicht dargestellten) Kabel verbunden, welches durch den Isolator 214 hindurch in den Innenraum der Eindrehwelle 136 hinein geführt ist und sich bis zur Längsmittelebene des Drehteils 160 durch die Eindrehwelle 136 hindurcherstreckt. Im Bereich der Längsmittelebene des Drehteils 160 tritt dieses Kabel durch eine Öffnung im Mantel der Eindrehwelle 136 aus und erstreckt sich von dort aus bis zu einem Kontaktpunkt an der Fahrzeugkarosserie 102. Aufgrund seiner Flexibilität kann dieses Kabel den Bewegungen der Fahrzeugkarosserie 102 beim Verschwenken derselben um die Drehachse 146 folgen.

Als elektronischer Schalter in dem Schaltglied 190 wird vorzugsweise ein Leistungstransistor verwendet.

Insbesondere kann dieser Leistungstransistor als ein Feldeffekttransistor oder als ein IGBT (Isolated Gate Bipolar Transistor) ausgebildet sein.

Ferner kann das Schaltglied 190 eine Freilaufdiode 202 umfassen.

In dem zwischen den Fahrzeugkarosserien 102 und den Elektroden 166 erzeugten elektrischen Feld in dem Tauchbad 108 wandern die Lackteilchen auf die Fahrzeugkarosserien 102 zu und lagern sich an deren Oberflächen an.

Dadurch, daß jedem Halterungsgestell 118 und somit jeder Fahrzeugkarosserie 102 eine eigene, mit dem jeweiligen Halterungsgestell 118 mitbewegte Stromsteuereinheit 186 zugeordnet ist, kann die Ausgangsspannung für jede einzelne Fahrzeugkarosserie 102 individuell bereitgestellt werden, so daß der zeitliche Verlauf der Ausgangsspannung und/oder des Ausgangsstromes für jede Fahrzeugkarosserie 102 individuell programmierbar ist.

Da die individuelle Ausgangsspannung für jede Fahrzeugkarosserie 102 mittels der mitbewegten Stromsteuereinheiten 186 erzeugt wird, ist es nicht erforderlich, die erste Stromschiene 184 oder die zweite Stromschiene 185 längs der Translationsrichtung 112 in mehrere, galvanisch voneinander getrennte Abschnitte zu unterteilen.

Damit entfallen auch alle Probleme, die mit dem Übergang einer Fahrzeugkarosserie 102 von einem Stromschienenabschnitt zum nächsten Stromschienenabschnitt verbunden sein könnten.

Insbesondere werden keine schaltbaren Kontaktelemente, beispielsweise Koppelthyristoren, benötigt, um in der Translationsrichtung 112 aufeinanderfolgende Stromschienenabschnitte während des Übergangs einer Fahrzeugkarosserie 102 von einem Stromschienenabschnitt zum darauffolgenden Stromschienenabschnitt elektrisch miteinander zu verbinden.

Auch die für die Steuerung des Übergangs zwischen zwei aufeinanderfolgenden Stromschienenabschnitten bei herkömmlichen Elektrotauchlackieranlagen erforderlichen Sensoren, welche die Annäherung einer Fahrzeugkarosserie 102 an das Ende eines Stromschienenabschnitts detektieren, können entfallen.

## Patentansprüche

1. Elektrotauchlackieranlage zum Lackieren von Werkstücken, insbesondere von Fahrzeugkarosserien (102),
umfassend mindestens ein Tauchbad (108), in dem mindestens eine Elektrode (166) angeordnet ist,
eine Fördervorrichtung (110), welche die Werkstücke in das Tauchbad (108) einbringt und aus dem Tauchbad (108) wieder ausbringt, und eine Stromversorgungseinrichtung (168), die aus einer Eingangs-Wechselspannung eine Ausgangsspannung, insbesondere eine Ausgangs-Gleichspannung, erzeugt, deren eines Ausgangspotential an mindestens eines der zu lackierenden Werkstücke angelegt wird und deren anderes Ausgangspotential an mindestens eine der im Tauchbad (108) angeordneten Elektroden (166) angelegt wird,
wobei die Stromversorgungseinrichtung (168) mindestens eine Stromsteuereinheit (186) umfasst, die sich zusammen mit einem der Stromsteuereinheit (186) zugeordneten Werkstück durch zumindest einen Abschnitt der Elektrotauchlackieranlage (100) bewegt und das Ausgangspotential für das der Stromsteuereinheit (186) zugeordnete Werkstück bereitstellt,
**dadurch gekennzeichnet,**
**dass** die Stromversorgungseinrichtung (168) zwei Stromschienen (184, 185) umfasst, mit welchen die mindestens eine Stromsteuereinheit (186) verbindbar ist,
wobei die zwei Stromschienen (184, 185), mit welchen die mindestens eine Stromsteuereinheit (186) verbindbar ist, einem Tauchbad (108) der Elektrotauchlackieranlage (100) zugeordnet sind und sich übergangsfrei über die Länge des Tauchbads hinweg erstrecken.

2. Elektrotauchlackieranlage nach Anspruch 1, **dadurch gekennzeichnet, dass** die Fördervorrichtung (110) mehrere Halterungsgestelle (118) umfasst, an denen jeweils ein zu lackierendes Werkstück angeordnet ist, und dass jedem Halterungsgestell (118) jeweils eine Stromsteuereinheit (186) zugeordnet ist, welche das Ausgangspotential für das an dem betreffenden Halterungsgestell (118) angeordnete Werkstück bereitstellt.

3. Elektrotauchlackieranlage nach Anspruch 2, **dadurch gekennzeichnet, dass** an jedem Halterungsgestell (118) jeweils eine Stromsteuereinheit (186) angeordnet ist, welche das Ausgangspotential für das an dem betreffenden Halterungsgestell (118) angeordnete Werkstück bereitstellt.

4. Elektrotauchlackieranlage nach einem der Ansprüche 1 bis 3, **dadurch gekennzeichnet, dass** die Elektrotauchlackieranlage (100) mehrere Stromsteuereinheiten (186) umfasst und dass das von jeweils einer Stromsteuereinheit (186) bereitgestellte Ausgangspotential von den von den jeweils anderen Stromsteuereinheiten (186) bereitgestellten Ausgangspotentialen unabhängig ist.

5. Elektrotauchlackieranlage nach einem der Ansprüche 1 bis 4, **dadurch gekennzeichnet, dass** jede Stromsteuereinheit (186) die Ausgangsspannung und/oder den Ausgangsstrom für das ihr zugeordnete Werkstück gemäß einem in Abhängigkeit vom Werkstücktyp typspezifisch vorgegebenen Spannungsverlauf bzw. Stromverlauf steuert oder regelt.

6. Elektrotauchlackieranlage nach einem der Ansprüche 1 bis 5, **dadurch gekennzeichnet, dass** die Stromversorgungseinrichtung (168) eine Gleichrichterschaltung (176) umfasst, welche aus der Eingangs-Wechselspannung eine Zwischenausgangsspannung erzeugt, deren eines Potential an eine Stromschiene (184), mit welcher die mindestens eine Stromsteuereinheit (186) verbindbar ist, angelegt wird.

7. Elektrotauchlackieranlage nach Anspruch 6, **dadurch gekennzeichnet, dass** das andere Potential der Zwischenausgangsspannung an die mindestens eine Elektrode (166) in dem mindestens einen Tauchbad (108) und/oder an eine weitere Stromschiene (185), mit welcher die mindestens eine Stromsteuereinheit (186) verbindbar ist, angelegt wird.

8. Elektrotauchlackieranlage nach einem der Ansprüche 6 oder 7, **dadurch gekennzeichnet, dass** die Gleichrichterschaltung (176) eine, vorzugsweise ungesteuerte, Dioden-Gleichrichterbrücke umfasst.

9. Elektrotauchlackieranlage nach einem der Ansprüche 6 bis 8, **dadurch gekennzeichnet, dass** die Gleichrichterschaltung (176) eine Glättungsschaltung (178) zur Reduzierung der Restwelligkeit der Zwischenausgangsspannung umfasst.

10. Elektrotauchlackieranlage nach einem der Ansprüche 1 bis 9, **dadurch gekennzeichnet, dass** die Stromsteuereinheit (186) ein Schaltglied (190) umfasst, das eine dem Schaltglied (190) zugeführte Schaltglied-Eingangsspannung in eine mit einer Taktfrequenz getaktete Schaltglied-Ausgangsspannung wandelt.

11. Elektrotauchlackieranlage nach Anspruch 10, **dadurch gekennzeichnet, dass** das Schaltglied (190) mindestens einen Feldeffekttransistor und/oder mindestens einen IGBT umfasst.

12. Elektrotauchlackieranlage nach einem der Ansprüche 10 oder 11, **dadurch gekennzeichnet, dass** die getaktete Schaltglied-Ausgangsspannung ein steuerbares Tastverhältnis aufweist.

13. Elektrotauchlackieranlage nach einem der Ansprüche 10 bis 12, **dadurch gekennzeichnet, dass** die Stromsteuereinheit (186) eine Regelschaltung (192) aufweist, welche das Schaltglied (190) in Abhängigkeit von einer Soll-Ausgangsspannung ansteuert.

14. Elektrotauchlackieranlage nach einem der Ansprüche 10 bis 13, **dadurch gekennzeichnet, dass** die Taktfrequenz mindestens ungefähr 10 kHz, vorzugsweise mindestens ungefähr 20 kHz, beträgt.

15. Elektrotauchlackieranlage nach einem der Ansprüche 1 bis 14, **dadurch gekennzeichnet, dass** die Taktfrequenz höchstens ungefähr 200 kHz, vorzugsweise höchstens ungefähr 100 kHz, beträgt.

16. Elektrotauchlackieranlage nach einem der Ansprüche 1 bis 15, **dadurch gekennzeichnet, dass** die Stromsteuereinheit (186) eine Glättungsschaltung (196) umfasst.

17. Elektrotauchlackieranlage nach einem der Ansprüche 1 bis 16, **dadurch gekennzeichnet, dass** die Stromsteuereinheit (186) eine Impulsformungsschaltung (200) umfasst.

## Claims

1. Electrodeposition coating installation for coating workpieces, in particular vehicle bodies (102),
comprising at least one immersion bath (108) in which at least one electrode (166) is arranged,
a conveying apparatus (110) which introduces the workpieces into the immersion bath (108) and removes them from the immersion bath (108) again, and a power supply unit (168) which generates, from an AC input voltage, an output voltage, in particular a DC output voltage, one output potential of which is applied to at least one of the workpieces to be coated and the other output potential of which is applied to at least one of the electrodes (166) arranged in the immersion bath (108),
wherein the power supply unit (168) comprises at least one current control unit (186) which moves, together with a workpiece associated with the current control unit (186), through at least one section of the electrodeposition coating installation (100) and provides the output potential for the workpiece associated with the current control unit (186),
**characterised in that**
the power supply unit (168) comprises two contact rails (184, 185) to which the at least one current control unit (186) is connectable, wherein the two contact rails (184, 185) to which the at least one current control unit (186) is connectable are associated with an immersion bath (108) of the electrodeposition coating installation (100) and extend, without any junction, over the length of the immersion bath.

2. Electrodeposition coating installation according to claim 1, **characterised in that** the conveying apparatus (110) comprises a plurality of mounting frames (118) on each of which a workpiece to be coated is arranged, and that associated with each mounting frame (118) is a current control unit (186), which provides the output potential for the workpiece arranged on the appertaining mounting frame (118).

3. Electrodeposition coating installation according to claim 2, **characterised in that** arranged on each mounting frame (118) is a current control unit (186) which provides the output potential for the workpiece arranged on the appertaining mounting frame (118).

4. Electrodeposition coating installation according to one of the claims 1 to 3, **characterised in that** the electrodeposition coating installation (100) comprises a plurality of current control units (186) and that the output potential provided by each current control unit (186) is dependent on the output potentials provided by the respective other current control units (186).

5. Electrodeposition coating installation according to one of the claims 1 to 4, **characterised in that** each current control unit (186) controls or regulates the output voltage and/or the output current for the workpiece associated with it according to a voltage pattern or current pattern pre-determined type-specifically depending on the workpiece type.

6. Electrodeposition coating installation according to one of the claims 1 to 5, **characterised in that** the power supply unit (168) comprises a rectifier circuit (176) which generates from the AC input voltage an intermediate output voltage, one potential of which is applied to a current rail (184) to which the at least one current control unit (186) is connectable.

7. Electrodeposition coating installation according to claim 6, **characterised in that** the other potential of the intermediate output voltage is applied to the at least one electrode (166) in the at least one immersion bath (108) and/or to a further current rail (185) to which the at least one current control unit (186) is connectable.

8. Electrodeposition coating installation according to one of the claims 6 or 7, **characterised in that** the rectifier circuit (176) comprises a, preferably non-controlled, diode rectifier bridge.

9. Electrodeposition coating installation according to one of the claims 6 to 8, **characterised in that** the rectifier circuit (176) comprises a smoothing circuit (178) for reducing the residual ripple of the intermediate output voltage.

10. Electrodeposition coating installation according to one of the claims 1 to 9, **characterised in that** the current control unit (186) comprises a switching element (190) which converts a switching element input voltage supplied to the switching element (190) into a switching element output voltage clocked at a clock frequency.

11. Electrodeposition coating installation according to claim 10, **characterised in that** the switching device (190) comprises at least one field effect transistor and/or at least one IGBT.

12. Electrodeposition coating installation according to one of the claims 10 or 11, **characterised in that** the clocked switching element output voltage has a controllable pulse duty factor.

13. Electrodeposition coating installation according to one of the claims 10 to 12, **characterised in that** the current control unit (186) comprises a regulating circuit (192) which controls the switching device (190) depending on a target output voltage.

14. Electrodeposition coating installation according to one of the claims 10 to 13, **characterised in that** the clock frequency is at least approximately 10 kHz, preferably at least approximately 20 kHz.

15. Electrodeposition coating installation according to one of the claims 1 to 14, **characterised in that** the clock frequency is not more than approximately 200 kHz, preferably not more than approximately 100 kHz.

16. Electrodeposition coating installation according to one of the claims 1 to 15, **characterised in that** the current control unit (186) comprises a smoothing circuit (196).

17. Electrodeposition coating installation according to one of the claims 1 to 16, **characterised in that** the current control unit (186) comprises a pulse shaping circuit (200).

## Revendications

1. Installation d'application de peinture électrophorétique par immersion, pour la peinture de pièces, en particulier de carrosseries de véhicules (102),
comprenant au moins un bain d'immersion (108) où est disposée au moins une électrode (166),
un dispositif de transport (110) introduisant les pièces dans le bain d'immersion (108) et retirant celles-ci du bain d'immersion (108), et un dispositif d'alimentation en courant (168) générant à partir d'une tension alternative d'entrée une tension de sortie, en particulier une tension continue de sortie, dont un potentiel de sortie est appliqué à au moins une des pièces à peindre et dont un autre potentiel de sortie est appliqué à au moins une des électrodes (166) disposées dans le bain d'immersion (108),
le dispositif d'alimentation en courant (168) comprenant au moins une unité de commande de courant (186) qui se déplace avec une pièce affectée à l'unité de commande de courant (186) par au moins une section de l'installation d'application de peinture électrophorétique par immersion (100) et fournit le potentiel de sortie pour la pièce affectée à l'unité de commande de courant (186),
**caractérisée en ce que**
le dispositif d'alimentation en courant (168) comprend deux barres conductrices (184, 185) auxquelles l'unité ou les unités de commande de courant (186) peuvent être reliées,
les deux barres conductrices (184, 185) auxquelles l'unité ou les unités de commande de courant (186) peuvent être reliées étant affectées à un bain d'immersion (108) de l'installation d'application de peinture électrophorétique par immersion (100) et s'étendant sans transition sur la longueur du bain d'immersion.

2. Installation d'application de peinture électrophorétique par immersion selon la revendication 1, **caractérisée en ce que** le dispositif de transport (110) comprend plusieurs structures de support (118) sur chacune desquelles est disposée une pièce à peindre, et **en ce qu'**à chaque structure de support (118) est affectée une unité de commande de courant (186) qui fournit le potentiel de sortie pour la pièce disposée sur la structure de support (118) concernée.

3. Installation d'application de peinture électrophorétique par immersion selon la revendication 2, **caractérisée en ce qu'**une unité de commande de courant (186) est disposée sur chaque structure de support (118), laquelle fournit le potentiel de sortie pour la pièce disposée sur la structure de support (118) concernée.

4. Installation d'application de peinture électrophorétique par immersion selon l'une des revendications 1 à 3, **caractérisée en ce que** ladite installation d'application de peinture électrophorétique par immersion (100) comprend plusieurs unités de commande de courant (186) et **en ce que** le potentiel de sortie fourni par chaque unité de commande de courant (186) est indépendant des potentiels de sortie fournis par les autres unités de commande de courant (186).

5. Installation d'application de peinture électrophorétique par immersion selon l'une des revendications 1 à 4, **caractérisée en ce que** chaque unité de commande de courant (186) commande ou régule la tension de sortie et/ou le courant de sortie pour la pièce qui lui est affectée conformément à une courbe de tension ou une courbe de courant définie en fonction du type de pièce.

6. Installation d'application de peinture électrophorétique par immersion selon l'une des revendications 1 à 5, **caractérisée en ce que** le dispositif d'alimentation en courant (168) comprend un circuit redresseur de courant (176) qui génère à partir de la tension alternative d'entrée une tension intermédiaire de sortie dont un potentiel est appliqué à une barre conductrice (184) à laquelle l'unité ou les unités de commande de courant (186) peuvent être reliées.

7. Installation d'application de peinture électrophorétique par immersion selon la revendication 6, **caractérisée en ce que** l'autre potentiel de la tension intermédiaire de sortie est appliquée à l'électrode ou aux électrodes (166) dans le ou les bains d'immersion (108) et/ou à une autre barre conductrice (185) à laquelle l'unité ou les unités de commande de courant (186) peuvent être reliées.

8. Installation d'application de peinture électrophorétique par immersion selon la revendication 6 ou 7, **caractérisée en ce que** le circuit redresseur de courant (176) comprend un pont redresseur à diodes préférentiellement non commandé.

9. Installation d'application de peinture électrophorétique par immersion selon l'une des revendications 6 à 8, **caractérisée en ce que** le circuit redresseur de courant (176) comprend un circuit de lissage (178) pour réduire l'ondulation résiduelle de la tension intermédiaire de sortie.

10. Installation d'application de peinture électrophorétique par immersion selon l'une des revendications 1 à 9, **caractérisée en ce que** l'unité de commande de courant (186) comprend un élément de commutation (190) qui transforme une tension d'entrée conduite vers l'élément de commutation (190) en une tension de sortie d'élément de commutation cadencée par une fréquence d'impulsions.

11. Installation d'application de peinture électrophorétique par immersion selon la revendication 10, **caractérisée en ce que** l'élément de commutation (190) comprend au moins un transistor à effet de champ et/ou au moins un IGBT.

12. Installation d'application de peinture électrophorétique par immersion selon la revendication 10 ou 11, **caractérisée en ce que** la tension de sortie d'élément de commutation cadencée présente un rapport cyclique réglable.

13. Installation d'application de peinture électrophorétique par immersion selon l'une des revendications 10 à 12, **caractérisée en ce que** l'unité de commande de courant (186) comprend un circuit de régulation (192) qui excite l'élément de commutation (190) en fonction d'une tension de sortie de consigne.

14. Installation d'application de peinture électrophorétique par immersion selon l'une des revendications 10 à 13, **caractérisée en ce que** la fréquence d'impulsions est d'au moins 10 kHz environ, préférentiellement d'au moins 20 kHz environ.

15. Installation d'application de peinture électrophorétique par immersion selon l'une des revendications 1 à 14, **caractérisée en ce que** la fréquence d'impulsions est au maximum de 200 kHz environ, préférentiellement au maximum de 100 kHz environ.

16. Installation d'application de peinture électrophorétique par immersion selon l'une des revendications 1 à 15, **caractérisée en ce que** l'unité de commande de courant (186) comprend un circuit de lissage (196).

17. Installation d'application de peinture électrophorétique par immersion selon l'une des revendications 1 à 16, **caractérisée en ce que** l'unité de commande de courant (186) comprend un circuit générateur d'impulsions (200).
